# EUROPEAN PATENT SPECIFICATION

(11) **EP 4 354 595 B1**
(45) Date of publication and mention of the grant of the patent: **21.10.2026**
(21) Application number: 24160000.6
(22) Date of filing: 05.08.2020
(51) Int. Cl.: H01M 10/6551, H01M 10/625, H01M 10/613, H01M 10/647, H01M 50/55, H01M 10/6556, H01M 50/204, H01M 50/244, H01M 50/249, H01M 50/271, H01M 50/298, H01M 50/507, H01M 50/552

(54) **UPPER PART COOLING-TYPE BATTERY PACK**
BATTERIEPACK MIT OBERER KÜHLUNG
BLOC-BATTERIE DE TYPE À REFROIDISSEMENT DE PARTIE SUPÉRIEURE

(30) Priority: 07.08.2019 KR 20190096284
(43) Date of publication of application: 17.04.2024
(62) Document number(s) of the earlier application(s) in accordance with Art. 76 EPC: 20849605.9 / 4 007 042
(73) Proprietor: LG Energy Solution, Ltd., Seoul 07335 (KR)
(72) Inventor: CHI, Ho-June, 34122 DAEJEON (KR); PARK, Jin-Yong, 34122 DAEJEON (KR); PARK, Jhin-Ha, 34122 DAEJEON (KR); LEE, Jung-Hoon, 34122 DAEJEON (KR); JIN, Hee-Jun, 34122 DAEJEON (KR); MUN, Jeong-O, 34122 DAEJEON (KR); KIM, Kyung-Mo, 34122 DAEJEON (KR)
(74) Representative: Plasseraud IP

(56) References cited:
- EP-A1- 3 345 779
- EP-A1- 3 664 186
- WO-A1-2019/124796
- KR-A- 20160 050 492

## Description

### TECHNICAL FIELD

The present disclosure relates to a battery pack, and more particularly, to a cooling and assembly structure of a battery pack.

The present application claims priority to Korean Patent Application No. 10-2019-0096284 filed on August 7, 2019 in the Republic of Korea.

### BACKGROUND ART

A secondary battery refers to a battery that may be charged and discharged, unlike a primary battery that cannot be charged, and the secondary battery is used as a power source not only for small high-tech electronics such as a mobile phone, a PDA or a laptop computer but also for an energy storage system (ESS), an electric vehicle (EV) or a hybrid electric vehicle (HEV).

Currently widely used secondary batteries include lithium ion batteries, lithium polymer batteries, nickel cadmium batteries, nickel hydrogen batteries, nickel zinc batteries, and the like. An operating voltage of a unit secondary battery cell, namely a unit battery cell, is about 2.5V to 4.2V. Therefore, if higher output voltage and greater energy capacity are required, a plurality of battery cells are connected in series to configure a battery module, or two or more battery modules are connected in series or in parallel and other components are added to configure a battery pack. For example, the battery module may refer to a device in which a plurality of secondary batteries are connected in series or in parallel, and the battery pack may refer to a device in which battery modules are connected in series or in parallel to increase capacity and output.

In addition to the battery modules, the battery pack may further include a cooling device for properly maintaining the temperature of the battery modules, a control device for monitoring the operating state of the battery modules, and a pack case for packaging them.

Meanwhile, in the case of a battery pack for an electric vehicle, since the installation space of the battery pack is limited depending on the overall length and width of the electric vehicle, it is important to increase the energy density by mounting battery modules and other components inside the pack case as space-efficiently as possible.

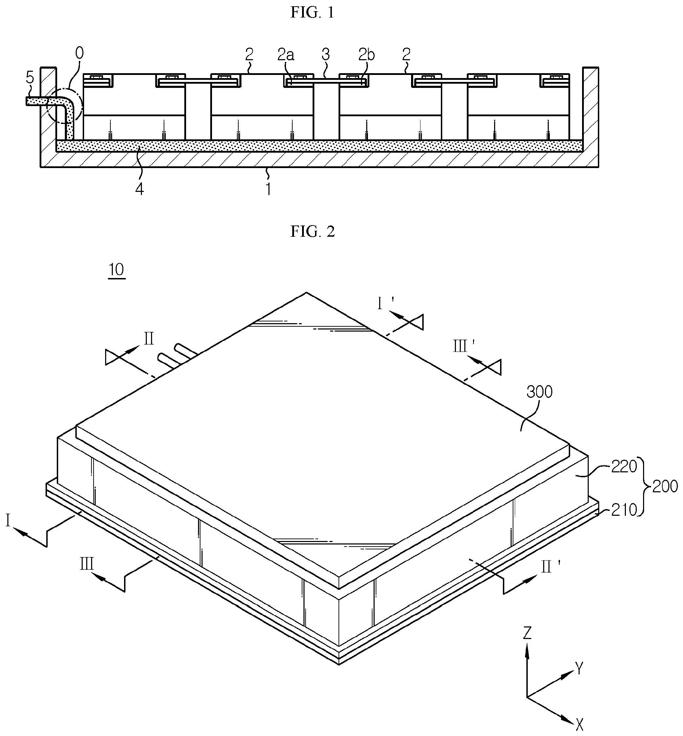

When assembling the battery pack, in the conventional case, as shown in FIG. 1, battery modules 2 are disposed on an upper surface of a pack tray 1, which corresponds to a bottom surface of the pack case, and a bolt is fastened to the pack tray 1 to mechanically fix the battery modules 2. In general, most battery modules 2 are fixed to the upper surface of the pack tray 1 by inserting long bolts in four locations at front and rear corners thereof. As an electrical connection structure between the battery modules, in many cases, both ends of the an inter-bus bar 3 having a metal bar shape are placed on the upper surface of a positive electrode terminal 2a of one battery module 2 and a negative electrode terminal 2b of another battery module 2, and they are fixed using two bolts.

In addition, as a cooling configuration of the battery pack, in many cases, a heatsink 4 is installed on a bottom surface of the pack tray 1, and a cooling water supply pipe is connected thereto to circulate a cooling water into and out of the pack case.

However, some problems have recently been pointed out on the assembly structure of the conventional battery pack. Among them, the problems such as inefficiency of the assembly process and the increase in cost, caused by the use of too many bolts to fix the battery modules and the inter-bus bars, space loss as in the 'O' area of FIG. 1, energy density reduction caused by heatsink installation, leakage of a cooling water, and sealing reliability of sealing pipes and cooling ports are frequently pointed out.

Therefore, the development of a battery pack to which a cooling and assembly structure capable of solving the above problems is applied is becoming an issue.

Further prior art is described in WO 2019/124796 A1, KR 2016 0050492 A and EP 3 345 779 A1.

### DISCLOSURE

### Technical Problem

The present disclosure is designed to solve the problems of the related art, and therefore the present disclosure is directed to providing a battery pack, which may eliminate a risk caused by leakage of a cooling, improve an energy density, and improve the efficiency of an assembly process.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a battery pack, which includes a plurality of battery modules and a pack case for fixedly installing the battery modules therein, the battery pack comprising: a pack case having a pack tray configured to support a lower portion of the battery modules and a pack cover configured to cover the battery modules and contact a top surface of the battery modules, wherein a heatsink is installed at an upper portion of the pack cover, wherein the plurality of battery modules each comprise a base plate, a top plate, a pair of side plates, and a front cover and a rear cover, wherein a positive electrode terminal and a negative electrode terminal are located at an outer side of the top of the front cover of each battery module, wherein the battery modules are arranged in two rows with the electrode terminals being disposed to face each other in a center portion of the pack case, in order to allow a serial and/or parallel connection of their electrode terminals, and the pack cover includes a terminal connection unit provided to an inner surface of a top thereof to electrically connect electrode terminals of the battery modules.

The heatsink may be provided integrally with the pack cover.

The heatsink may be mounted to a predetermined external structure.

The pack cover may include a terminal connection unit provided to an inner surface of a top thereof to electrically connect electrode terminals of the battery modules.

The battery modules may be configured such that, when the upper portion of the battery modules is covered by the pack cover, an electrode terminal of any one battery module and an electrode terminal of another battery module adjacent thereto make contact with the terminal connection unit in upper and lower directions, respectively, to be electrically connected.

Each of the battery modules may include battery cells and a module case for accommodating the battery cells, and the electrode terminal may have a rectangular plate shape and protrude on the front side of the module case.

The module case may include a terminal support formed to protrude on one side thereof to support a lower portion of the electrode terminal, the terminal support having a perforated hole formed in a vertical direction.

The pack cover may further include a mounting nut provided at the inner surface of the top thereof, and each battery module may be fixed to the pack cover by a mounting bolt that is inserted into the perforated hole of the terminal support and fastened to the mounting nut in a vertical direction.

At least one of the mounting bolt and the mounting nut may be made of an insulating material.

The terminal connection unit may include: an inter-bus bar configured to make a surface contact with the electrode terminal and having a fastening hole through which the mounting bolt passes; and a bracket member configured to support the inter-bus bar and fixedly coupled to the inner surface of the pack cover.

The bracket member may be shape-fitted with the mounting nut and attached to the inner surface of the pack cover.

In another aspect of the present disclosure, there is also provided a vehicle, comprising the battery pack described above. The vehicle may include an electric vehicle (EV) or a hybrid electric vehicle (HEV).

### Advantageous Effects

According to an embodiment of the present disclosure, since the heatsink is installed outside the pack case, the battery pack is free from the risk of cooling water leakage, and it is possible to simplify the assembly structure inside the pack case and improve the energy density.

According to another embodiment of the present disclosure, the efficiency of the assembly process may be improved by mechanically fixing the battery modules in the pack case and integrating electrical connection structures.

Other effects of the present disclosure may be understood by the following description and will be more clearly figured out by the embodiments of the present disclosure.

### DESCRIPTION OF DRAWINGS

FIG. 1 is a diagram schematically showing an example in which a conventional battery pack is assembled.
FIG. 2 is a perspective view schematically showing a battery pack according to an embodiment of the present disclosure.
FIG. 3 is a partially exploded perspective view showing the battery pack of FIG. 2.
FIG. 4 is a perspective view schematically showing a battery module according to an embodiment of the present disclosure.
FIG. 5 is a schematic sectional view, taken along the line I-I' of FIG. 2.
FIG. 6 is a schematic sectional view, taken along the line II-II' of FIG. 2.
FIG. 7 is a schematic sectional view, taken along the line III-III' of FIG. 2.
FIG. 8 is a schematic perspective view showing a terminal connection unit and a mounting nut according to an embodiment of the present disclosure.
FIG. 9 is a sectional view corresponding to FIG. 8.
FIG. 10 is a diagram for illustrating a structure for fixing and electrically connecting the battery modules according to an embodiment of the present disclosure.
FIG. 11 is a diagram corresponding to FIG. 7 to illustrate another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

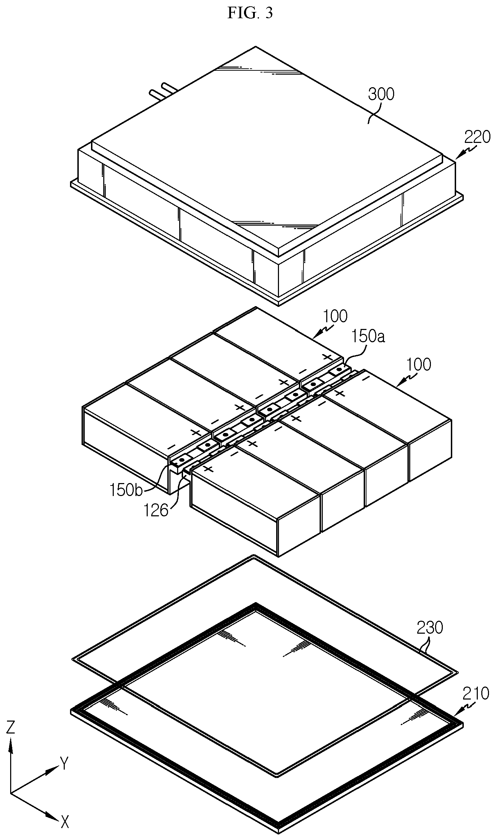

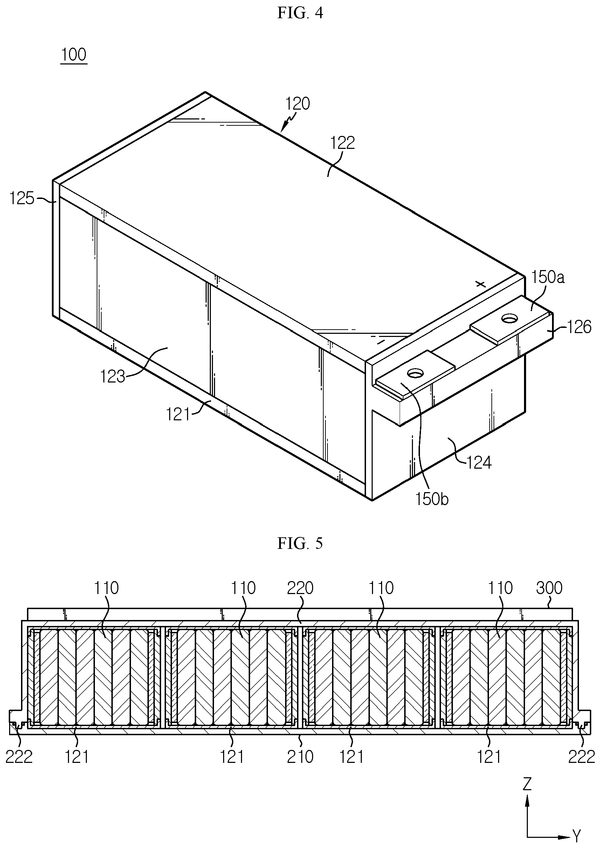

FIG. 2 is a perspective view schematically showing a battery pack according to an embodiment of the present disclosure, FIG. 3 is a partially exploded perspective view showing the battery pack of FIG. 2, and FIG. 4 is a perspective view schematically showing a battery module according to an embodiment of the present disclosure.

Referring to these drawings, a battery pack 10 according to an embodiment of the present disclosure includes a plurality of battery modules 100, a pack case 200 for accommodating the battery modules 100, and a heatsink 300 installed at an upper portion of the pack case 200.

As shown in FIGS. 2 and 3, the pack case 200 includes a pack tray 210 and a pack cover 220 coupled to each other. The pack tray 210 has a plate shape with a large area to support a lower portion of the battery modules 100, and the pack cover 220 is coupled to the pack tray 210 and configured to cover the entire battery modules 100.

In particular, as will be described later, battery cells 110 are electrically connected and mechanically fixed simultaneously by means of a terminal connection unit 221 provided to an inner surface of a top of the pack cover 220.

Among main components constituting the battery pack 10, a heatsink 300 corresponding to a cooling configuration will be described first, and then an internal assembly structure of the battery pack 10 will be described later.

The heatsink 300 of this embodiment has a flow path (not shown) through which a coolant may circulate. The coolant flowing in the flow path is not particularly limited as long as it flows easily in the flow path and has excellent cooling properties.

The heatsink 300 is located at an outer surface of the top of the pack cover 220. In other words, in the battery pack 10 of the present disclosure, since the heatsink 300 is provided outside the pack case 200, an electrical element and a cooling element are separated. Therefore, the heatsink 300 is free from the risk of cooling water leakage caused by external shock. In addition, since the heatsink 300 disappears from the inside of the pack case 200, it is possible to simplify the assembly structure and increase the energy density.

By installing the heatsink 300 at the top of the pack cover 220, the heatsink 300 may be manufactured separately from the pack cover 220 and then placed and fixed on the pack cover 220. However, in this case, due to the difference in surface roughness between the heatsink 300 and the pack cover 220, the thermal contact resistance is large, which may deteriorate the cooling efficiency.

Therefore, in this embodiment, the pack cover 220 and the heatsink 300 are configured in an integrated form. For example, heatsink 300 may be regarded as being integrated as a part of the pack cover 220 to minimize the thermal contact resistance and the heat conduction path. As the pack cover 220 integrated with the heatsink 300 absorbs heat inside the pack case 200, the cooling performance may not be deteriorated even if the heatsink 300 is outside the pack case 200.

As an alternative of this embodiment, a thermal interface material (TIM) may be placed on the outer surface of the top of the pack cover 220, and the heatsink 300 may placed thereon. The TIM fills a gap between the pack cover 220 and the heatsink 300 to reduce the thermal contact resistance. As the TIM, a thermal pad or resin with high thermal conductivity may be used.

As shown in FIGS. 4 and 5, each battery module 100 accommodated in the pack case 200 includes battery cells 110, a module case 120 for accommodating the battery cells 110 in an inner space thereof, and electrode terminals 150a, 150b provided to the module case 120 to be exposed to the outside.

The battery cells 110 are pouch-type secondary battery cells widely known in the art. The pouch-type secondary batteries may be stacked in the inner space of the module case 120, which is advantageous in increasing energy density. Of course, the battery cell 110 is not necessarily limited to the pouch-type battery cell 110. For example, it is possible to use a cylindrical secondary battery cell or a prismatic secondary battery cell instead of the pouch-type secondary battery cell.

The module case 120 may include a base plate 121 and a top plate 122 for covering lower and upper portions of the battery cells 110, respectively, a pair of side plates 123 arranged at the outermost part of the battery cells 110 according to an arrangement direction thereof, and a front cover 124 and a rear cover 125 for covering front and rear sides of the battery cells 110, respectively.

The top plate 122 of the module case 120 may be provided to be in surface contact with an inner surface of the pack cover 220. A thermal pad may be further interposed between the top plate 122 and the inner surface of the pack cover 220.

The front cover 124 and the rear cover 125 are located at the front of the battery cells 110 so that the electrode leads of the battery cells 110 or components such as an inter connection board (ICB) are not exposed to the outside. The electrode terminals 150a, 150b include a positive electrode terminal 150a and a negative electrode terminal 150b, are located at an outer side of the top of the front cover 124 to have a rectangular plate shape so that its wide surface is placed horizontally, and have holes formed therein so that bolts may be inserted in upper and lower directions.

The electrode terminals 150a, 150b may be placed on and supported by a terminal support 126. Here, the terminal support 126 is a part protruding from the front cover 124 and may be used as a place where a lower portion of the electrode terminals 150a, 150b is supported and a bolt of the battery module 100 is fastened.

The terminal support 126 may be provided to extend along a width direction of the front cover 124, and in a place where the positive electrode terminal 150a and the negative electrode terminal 150b are located, one perforated hole into which a bolt may be inserted may be formed in a vertical direction. The perforated hole is not shown in the drawings, but may be formed to coincide with the hole of the electrode terminals 150a, 150b in upper and lower directions.

For reference, although the front cover 124 and the terminal support 126 are described separately, they may be manufactured in an integral type. In addition, although not shown, a perforated hole may be provided such that a mounting bolt 201 is inserted in another place where the electrode terminals 150a, 150b are not located. In this way, the mounting bolt 201 may be fastened to the pack cover 220.

The pair of side plate 123 may serve to compress and support the battery cells 110 from the outside at the outermost battery cell 110 along the arrangement direction of the battery cells 110.

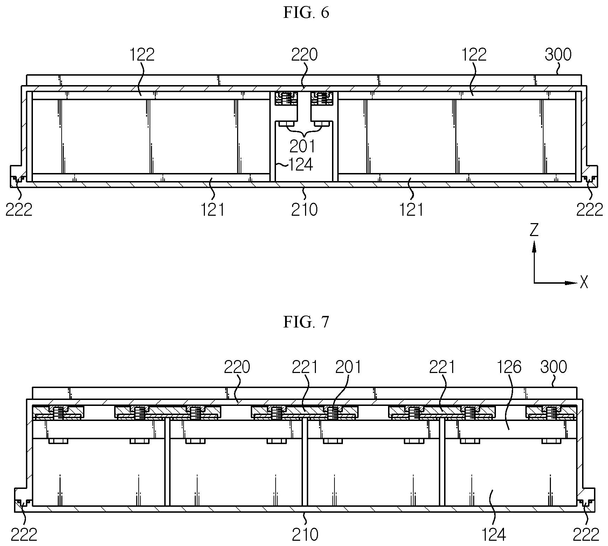

Next, with reference to FIGS. 6 to 10, a mechanical fixing and electrical connection structure for each of the battery module 100, 100 inside the pack case 200 will be described in detail.

In this embodiment, eight battery modules 100 may be accommodated in total inside the pack case 200, namely four battery modules in each of two rows. At this time, the group of the battery modules100 in the first row and the group of the battery modules 100 in the second row (see FIG. 3) may be located such that the electrode terminals 150a, 150b thereof face each other based on a center portion of the pack case 200. This arrangement of the battery modules 100 may be advantageous in minimizing the electrical connection distance between the battery modules 100. Of course, such an arrangement of the battery modules 100 is an example, and the total number or arrangement structure of the battery modules 100 may be changed as desired.

The eight battery modules 100 may be placed on the bottom of the pack tray 210 and supported thereby, and may be fixed to the terminal connection unit 221 provided at the inner surface of the top of the pack cover 220 by bolting. Moreover, the electrode terminals 150a, 150b of adjacent battery modules 100 may contact the terminal connection unit 221 to be electrically connected to each other.

For example, when the upper portion of the module case 120 is covered by the pack cover 220, the electrode terminals 150a, 150b of one battery module 100 and the electrode terminals 150a, 150b of another battery module 100 may be electrically connected to each other by making contact with the terminal connection unit 221 in upper and lower directions.

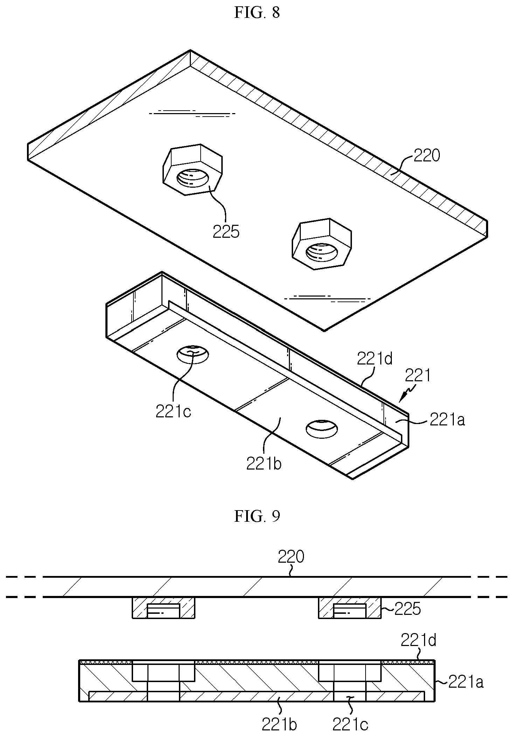

As shown in FIGS. 8 and 9, the pack cover 220 may further include a mounting nut 225 at an inner surface of the top thereof. The mounting nut 225 may be attached to the pack cover 220 in advance by welding. The terminal connection unit 221 is shape-fitted with the mounting nut 225 and be attached to the pack cover 220.

The terminal connection unit 221 has a metal bar-shaped inter-bus bar 221b having a fastening hole 221c through which the mounting bolt 201 may pass and making surface contact with the electrode terminals 150a, 150b of the battery module 100, and a bracket member 221a made of an insulating material that supports the inter-bus bar 221b and is fixedly coupled to the inner surface of the top of the pack cover 220.

The bracket member 221a has a rear surface shape-fitted with the mounting nut 225, and a front surface of the bracket member 221a is provided such that the inter-bus bar 221b is detachably attached thereto, so that the fastening hole 221c of the inter-bus bar 221b and the mounting nut 225 are coincided with each other in upper and lower directions.

The bracket member 221a may be simply attached to the pack cover 220 by attaching a both-sided adhesive tape 221d to a rear surface thereof. Of course, the bracket member 221a may also be attached in other ways, such as bolt and nut combination.

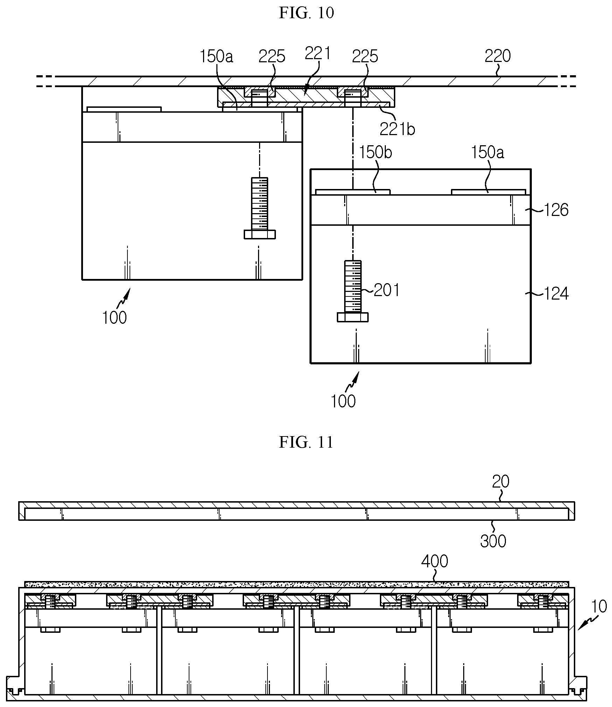

With this configuration, as shown in FIG. 10, each battery module 100 may be fixed to the pack cover 220 by fastening the mounting bolt 201 to the mounting nut 225 from the perforated hole of the terminal support 126 through the holes of the electrode terminals 150a, 150b and the fastening hole 221c of the inter-bus bar 221b. At this time, two adjacent battery modules 100 may be electrically connected to each other because the positive electrode terminal 150a and the negative electrode terminal 150b contact the inter-bus bar 221b of the terminal connection unit 221, respectively.

At least one of the mounting bolt 201 and the mounting nut 225 may be an insulation bolt and an insulation nut. By using the insulation bolt and the insulation nut, a short circuit may be prevented even if the battery modules 100 are mechanically fixed and electrically connected to the pack cover 220 simultaneously.

As described above, the battery pack 10 of the present disclosure may be assembled very easily since the mechanical fixing and electrical connection structure of the battery modules 100 is integrated. In addition, by fixing each battery module 100 to the pack cover 220 instead of fixing the same on the pack tray 210 with bolts, the space utilization rate or the degree of freedom of the pack tray 210 may be improved.

An example where the battery pack 10 of the present disclosure is assembled will be described briefly as follows.

As for the battery pack 10 of the present disclosure, it is preferable to turn the pack cover 220 upside down, place the battery modules 100 therein, and then fix them, contrary to the assembly method of a general battery pack 10.

That is, in a state where the pack cover 220 is turned upside down, each battery module 100 is positioned so that the electrode terminals 150a, 150b of the battery module 100 face the terminal connection unit 221 of the pack cover 220, respectively.

After that, the mounting bolt 201 is fastened to a fastening part between each battery module 100 and the pack cover 220. That is, by placing each battery module 100 at a predetermined position and fastening the mounting bolt 201 thereto, the mechanical fixing work and the serial and/or parallel connection work of the battery modules 100 may be easily solved at once.

Then, an O-ring 230 is interposed in an uneven portion of the pack cover 220, and the uneven portion is fitted into an edge portion of the pack tray 210, thereby completing a main assembly process.

Next, a battery pack 10 according to another embodiment of the present disclosure will be briefly described with reference to FIG. 11.

The battery pack 10 according to this embodiment has the same basic mechanical and electrical assembly structure as the battery pack 10 of the former embodiment, but has a difference in the cooling configuration.

That is, in the former embodiment, the pack cover 220 and the heatsink 300 are integrated, but in this embodiment, the pack cover 220 and the heatsink 300 are provided in a separate type.

The heatsink 300 may be provided to be mounted to a predetermined external structure in advance. For example, an upper portion of the heatsink 300 is provided to be mounted to a chassis 20 of a vehicle, and a lower portion of the heatsink 300 is provided to face the upper surface of the pack cover 220. In addition, after the heatsink 300 is mounted to the vehicle chassis 20 in advance, the pack case 200 accommodating the remaining battery modules 100 is installed under the heatsink 300. In this case, a TIM 400 may be further provided on the upper surface of the pack cover 220.

According to this, since the electrical energy component and the cooling component of the battery pack 10 are completely separated, the structure of each component may be further simplified. In particular, since the heatsink 300 is provided to be mounted to a vehicle in advance, it may be easier to connect a cooling water pipe and secure sealing properties, which are required for the cooling configuration.

Meanwhile, the battery pack according to the present disclosure described above may further include various devices for controlling charging and discharging of the battery modules, such as a BMS, a current sensor and a fuse. The battery pack may be applied not only to vehicles such as electric vehicles or hybrid electric vehicles. Of course, the battery pack may be applied to energy storage systems or other IT products.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Meanwhile, even though the terms expressing directions such as "upper", "lower", "left" and "right" are used in the specification, they are just for convenience of description and can be expressed differently depending on the location of a viewer or a subject, as apparent to those skilled in the art.

## Claims

1. A battery pack (10), which includes a plurality of battery modules (100) and a pack case (200) for fixedly installing the battery modules (100) therein, the battery pack (10) comprising:
a pack case (200) having a pack tray (210) configured to support a lower portion of the battery modules (100) and a pack cover (220) configured to cover the battery modules (100) and contact a top surface of the battery modules (100);
**characterized in that** a heatsink (300) is installed at an upper portion of the pack cover (220),
wherein the plurality of battery modules (100) each comprise a base plate (121), a top plate (122), a pair of side plates (123), and a front cover (124) and a rear cover (125), wherein a positive electrode terminal (150a) and a negative electrode terminal (150b) are located at an outer side of the top of the front cover (124) of each battery module (100),
wherein the battery modules (100) are arranged in two rows with the electrode terminals (150a, 150b) being disposed to face each other in a center portion of the pack case (200) in order to allow a serial and/or parallel connection of their electrode terminals (150a, 150b), and
wherein the pack cover (220) includes a terminal connection unit (221) provided to an inner surface of a top thereof to electrically connect electrode terminals (150a, 150b) of the battery modules (100).

2. The battery pack (10) according to claim 1,
wherein the heatsink (300) is provided integrally with the pack cover (220).

3. The battery pack (10) according to claim 1,
wherein the heatsink (300) is mounted to a predetermined external structure (20).

4. The battery pack (10) according to claim 1,
wherein the battery modules (100) are configured such that, when the upper portion of the battery modules (100) is covered by the pack cover (220), an electrode terminal (150a, 150b) of any one battery module (100) and an electrode terminal (150a, 150b) of another battery module (100) adjacent thereto make contact with the terminal connection unit (221) in upper and lower directions, respectively, to be electrically connected.

5. The battery pack (10) according to claim 1,
wherein each of the battery modules (100) includes battery cells (110) and a module case (120) for accommodating the battery cells (110), and
the electrode terminals (150a, 150b) have a rectangular plate shape and protrude on the front side of the module case (120).

6. The battery pack (10) according to claim 5,
wherein the module case (120) includes a terminal support (126) formed to protrude on one side thereof to support a lower portion of the electrode terminal (150a, 150b), the terminal support (126) having a perforated hole formed in a vertical direction.

7. The battery pack (10) according to claim 6,
wherein the pack cover (220) further includes a mounting nut (225) provided at the inner surface of the top thereof, and
each battery module (100) is fixed to the pack cover (220) by a mounting bolt (201) that is inserted into the perforated hole of the terminal support (126) and fastened to the mounting nut (225) in a vertical direction.

8. The battery pack (10) according to claim 7,
wherein at least one of the mounting bolt (201) and the mounting nut (225) is made of an insulating material.

9. The battery pack (10) according to claim 7,
wherein the terminal connection unit (221) includes:
an inter-bus bar (221b) configured to make a surface contact with the electrode terminal (150a, 150b) and having a fastening hole (221c) through which the mounting bolt (201) passes; and
a bracket member (221a) configured to support the inter-bus bar (221b) and fixedly coupled to the inner surface of the pack cover (220).

10. The battery pack (10) according to claim 9,
wherein the bracket member (221a) is shape-fitted with the mounting nut (225) and attached to the inner surface of the pack cover (220).

11. A vehicle, comprising the battery pack (10) according to any one of claims 1 to 10.

## Patentansprüche

1. Batteriepack (10), welches eine Mehrzahl von Batteriemodulen (100) und ein Packgehäuse (200) zum festen Installieren der Batteriemodule (100) darin aufweist, wobei das Batteriepack (10) umfasst:
• ein Packgehäuse (200), das einen Packträger (210), der so konfiguriert ist, dass er einen unteren Teil der Batteriemodule (100) trägt, und eine Packabdeckung (220) aufweist, die so konfiguriert ist, dass sie die Batteriemodule (100) abdeckt und eine obere Fläche der Batteriemodule (100) berührt;
• **dadurch gekennzeichnet, dass** ein Kühlkörper (300) an einem oberen Teil der Packabdeckung (220) installiert ist,
• wobei die Mehrzahl von Batteriemodulen (100) jeweils eine Bodenplatte (121), eine Kopfplatte (122), ein Paar Seitenplatten (123) und eine vordere Abdeckung (124) und eine hintere Abdeckung (125) umfassen, wobei ein positiver Elektrodenanschluss (150a) und ein negativer Elektrodenanschluss (150b) an einer Außenseite der Oberseite der vorderen Abdeckung (124) jedes Batteriemoduls (100) angeordnet sind,
• wobei die Batteriemodule (100) in zwei Reihen angeordnet sind, wobei die Elektrodenanschlüsse (150a, 150b) so angeordnet sind, dass sie einander in einem mittleren Teil des Packgehäuses (200) gegenüberliegen, um eine Reihen- und/oder Parallelschaltung ihrer Elektrodenanschlüsse (150a, 150b) zu ermöglichen, und
• wobei die Packabdeckung (220) eine Anschlussverbindungseinheit (221) aufweist, die an einer Innenfläche ihrer Oberseite vorgesehen ist, um Elektrodenanschlüsse (150a, 150b) der Batteriemodule (100) elektrisch zu verbinden.

2. Batteriepack (10) nach Anspruch 1,
wobei der Kühlkörper (300) einstückig mit der Packabdeckung (220) vorgesehen ist.

3. Batteriepack (10) nach Anspruch 1,
wobei der Kühlkörper (300) an einer vorbestimmten externen Struktur (20) montiert ist.

4. Batteriepack (10) nach Anspruch 1,
wobei die Batteriemodule (100) so konfiguriert sind, dass, wenn der obere Teil der Batteriemodule (100) durch die Packabdeckung (220) abgedeckt ist, ein Elektrodenanschluss (150a, 150b) eines beliebigen Batteriemoduls (100) und ein Elektrodenanschluss (150a, 150b) eines anderen, daran angrenzenden Batteriemoduls (100) mit der Anschlussverbindungseinheit (221) in einer oberen bzw. unteren Richtung in Kontakt kommen, um elektrisch verbunden zu werden.

5. Batteriepack (10) nach Anspruch 1,
• wobei jedes der Batteriemodule (100) Batteriezellen (110) und ein Modulgehäuse (120) zur Aufnahme der Batteriezellen (110) aufweist, und
• die Elektrodenanschlüsse (150a, 150b) eine rechteckige Plattenform aufweisen und an der Vorderseite des Modulgehäuses (120) vorstehen.

6. Batteriepack (10) nach Anspruch 5,
wobei das Modulgehäuse (120) einen Anschlussträger (126) aufweist, der so ausgebildet ist, dass er an dessen einer Seite vorsteht, um einen unteren Teil des Elektrodenanschlusses (150a, 150b) zu tragen, wobei der Anschlussträger (126) ein in einer vertikalen Richtung ausgebildetes Durchgangsloch aufweist.

7. Batteriepack (10) nach Anspruch 6,
• wobei die Packabdeckung (220) ferner eine Befestigungsmutter (225) aufweist, die an der Innenfläche ihrer Oberseite vorgesehen ist, und
• jedes Batteriemodul (100) an der Packabdeckung (220) durch einen Befestigungsbolzen (201) befestigt ist, der in das Durchgangsloch des Anschlussträgers (126) eingesetzt und an der Befestigungsmutter (225) in einer vertikalen Richtung festgezogen ist.

8. Batteriepack (10) nach Anspruch 7,
wobei mindestens eines der Elemente Befestigungsbolzen (201) und Befestigungsmutter (225) aus einem isolierenden Material hergestellt ist.

9. Batteriepack (10) nach Anspruch 7,
wobei die Anschlussverbindungseinheit (221) aufweist:
• eine Zwischen-Sammelschiene (221b), die so konfiguriert ist, dass sie einen Oberflächenkontakt mit dem Elektrodenanschluss (150a, 150b) herstellt, und ein Befestigungsloch (221c) aufweist, durch das der Befestigungsbolzen (201) hindurchgeht; und
• ein Halterungselement (221a), das so konfiguriert ist, dass es die Zwischen-Sammelschiene (221b) trägt, und fest mit der Innenfläche der Packabdeckung (220) gekoppelt ist.

10. Batteriepack (10) nach Anspruch 9,
wobei das Halterungselement (221a) formschlüssig mit der Befestigungsmutter (225) verbunden und an der Innenfläche der Packabdeckung (220) angebracht ist.

11. Fahrzeug, umfassend das Batteriepack (10) nach einem der Ansprüche 1 bis 10.

## Revendications

1. Bloc-batterie (10), qui comprend une pluralité de modules de batterie (100) et un boîtier de bloc (200) pour y installer de manière fixe les modules de batterie (100), le bloc-batterie (10) comprenant :
• un boîtier de bloc (200) comportant un plateau de bloc (210) configuré pour supporter une partie inférieure des modules de batterie (100) et un couvercle de bloc (220) configuré pour recouvrir les modules de batterie (100) et entrer en contact avec une surface supérieure des modules de batterie (100) ;
• **caractérisé en ce qu'**un dissipateur thermique (300) est installé au niveau d'une partie supérieure du couvercle de bloc (220),
• dans lequel la pluralité de modules de batterie (100) comprennent chacun une plaque de base (121), une plaque supérieure (122), une paire de plaques latérales (123), ainsi qu'un couvercle avant (124) et un couvercle arrière (125), dans lequel une borne d'électrode positive (150a) et une borne d'électrode négative (150b) sont situées sur un côté extérieur du sommet du couvercle avant (124) de chaque module de batterie (100),
• dans lequel les modules de batterie (100) sont agencés en deux rangées, les bornes d'électrode (150a, 150b) étant disposées de manière à se faire face dans une partie centrale du boîtier de bloc (200) afin de permettre une connexion en série et/ou en parallèle de leurs bornes d'électrode (150a, 150b), et
• dans lequel le couvercle de bloc (220) comprend une unité de connexion de borne (221) prévue sur une surface interne d'un sommet de celui-ci pour connecter électriquement des bornes d'électrode (150a, 150b) des modules de batterie (100).

2. Bloc-batterie (10) selon la revendication 1,
dans lequel le dissipateur thermique (300) est prévu d'un seul tenant avec le couvercle de bloc (220).

3. Bloc-batterie (10) selon la revendication 1,
dans lequel le dissipateur thermique (300) est monté sur une structure externe prédéterminée (20).

4. Bloc-batterie (10) selon la revendication 1,
dans lequel les modules de batterie (100) sont configurés de telle sorte que, lorsque la partie supérieure des modules de batterie (100) est recouverte par le couvercle de bloc (220), une borne d'électrode (150a, 150b) de l'un quelconque des modules de batterie (100) et une borne d'électrode (150a, 150b) d'un autre module de batterie (100) adjacent à celui-ci entrent en contact avec l'unité de connexion de borne (221) respectivement dans des directions supérieure et inférieure, pour être connectées électriquement.

5. Bloc-batterie (10) selon la revendication 1,
• dans lequel chacun des modules de batterie (100) comprend des éléments de batterie (110) et un boîtier de module (120) pour loger les éléments de batterie (110), et
• les bornes d'électrode (150a, 150b) présentent une forme de plaque rectangulaire et font saillie sur le côté avant du boîtier de module (120).

6. Bloc-batterie (10) selon la revendication 5,
dans lequel le boîtier de module (120) comprend un support de borne (126) formé pour faire saillie sur un côté de celui-ci afin de supporter une partie inférieure de la borne d'électrode (150a, 150b), le support de borne (126) présentant un trou perforé formé dans une direction verticale.

7. Bloc-batterie (10) selon la revendication 6,
• dans lequel le couvercle de bloc (220) comprend en outre un écrou de montage (225) prévu au niveau de la surface interne du sommet de celui-ci, et
• chaque module de batterie (100) est fixé au couvercle de bloc (220) par un boulon de montage (201) qui est inséré dans le trou perforé du support de borne (126) et serré sur l'écrou de montage (225) dans une direction verticale.

8. Bloc-batterie (10) selon la revendication 7,
dans lequel au moins l'un parmi le boulon de montage (201) et l'écrou de montage (225) est constitué d'un matériau isolant.

9. Bloc-batterie (10) selon la revendication 7,
dans lequel l'unité de connexion de borne (221) comprend :
• une barre d'interconnexion (221b) configurée pour établir un contact de surface avec la borne d'électrode (150a, 150b) et présentant un trou de fixation (221c) à travers lequel passe le boulon de montage (201) ; et
• un élément de support (221a) configuré pour supporter la barre d'interconnexion (221b) et couplé de manière fixe à la surface interne du couvercle de bloc (220).

10. Bloc-batterie (10) selon la revendication 9,
dans lequel l'élément de support (221a) est ajusté en forme avec l'écrou de montage (225) et fixé à la surface interne du couvercle de bloc (220).

11. Véhicule, comprenant le bloc-batterie (10) selon l'une quelconque des revendications 1 à 10.
